# EUROPÄISCHE PATENTANMELDUNG

(11) **EP 2 090 812 A1**
(43) Veröffentlichungstag der Anmeldung: **19.08.2009**
(21) Anmeldenummer: 08021328.3
(22) Anmeldetag: 09.12.2008
(51) Int. Cl.: F16K 5/06, F16K 47/04

(54) **Kugelhahn**

(30) Priorität: 12.02.2008 DE 102008008801
(71) Anmelder: Franz Schuck GmbH, 89555 Steinheim (DE)
(72) Erfinder: Weihs, Robert, 89555 Steinheim (DE)
(74) Vertreter: Lorenz, Markus

(57) **Zusammenfassung**

Ein Kugelhahn weist ein Gehäuse (12), einen im Gehäuse verlaufenden Durchflusskanal (14) für ein strömendes Medium und eine im Gehäuse gelagerte, schaltbare Absperrvorrichtung (16) zum Öffnen und Schließen des Durchflusskanals auf. Erfindungsgemäß ist eine schaltbare Stelleinheit (18) zum Einstellen der Durchflussmenge des strömenden Mediums vorhanden.

## Beschreibung

Die Erfindung betrifft einen Kugelhahn nach der im Oberbegriff von Anspruch 1 näher definierten Art.

Ein gattungsgemäßer Kugelhahn ist beispielsweise aus der DE 41 10 080 A1 bekannt. Der Kugelhahn weist ein Gehäuse und einen im Gehäuse verlaufenden Durchflusskanal für ein strömendes Medium auf. Im Gehäuse ist eine schaltbare Absperrvorrichtung zum Öffnen und Schließen des Durchflusskanals gelagert, welche im Allgemeinen auch als "Kugelküken" bezeichnet wird.

Die bekannten Kugelhähne ermöglichen ein vorteilhaftes Öffnen und Schließen des Durchflusskanals, eignen sich jedoch nicht oder nur bedingt zur Durchflussregelung bzw. Durchflussbegrenzung. Versuche, Kugelhähne mit einer Regelfunktion (sogenannte Regelkugelhähne) auszubilden, indem die Durchflussöffnung des Kugelhahns mit einer besonderen geometrischen Gestaltung versehen wurde, haben nicht zu befriedigenden Ergebnissen geführt. Zur Durchflussregelung werden daher Regelarmaturen eingesetzt, die als Klappen, Ventile oder dergleichen ausgebildet sind. Derartige Regelarmaturen eignen sich jedoch nicht oder nur bedingt zum dichten Absperren von Medien unter hohen Drücken.

Ein Nachteil der bekannten Regelarmaturen besteht auch darin, dass der Regelantrieb teuer ist, insbesondere weil dieser ausgelegt sein muss, um hohe Momente für das sogenannte Losbrechmoment beim Öffnen und Schließen aufzubringen. Die bekannten Regelarmaturen benötigen zudem nach dem Öffnen eine für bestimmte Anwendungen zu große Zeitspanne, bis die gewünschte Durchflussmenge eingestellt ist.

In der Praxis besteht zudem das Problem, dass die bekannten Kugelhähne die bei manchen Anwendungen erforderlichen, schnellen Schließzeiten nicht erreichen.

Es ist daher Aufgabe der vorliegenden Erfindung, einen Kugelhahn zu schaffen, der die Nachteile des Standes der Technik weitgehend vermeidet, insbesondere ein zuverlässiges und schnelles Öffnen und Schließen sowie eine Durchflussregelung ermöglicht.

Erfindungsgemäß wird diese Aufgabe durch einen Kugelhahn mit den in Anspruch 1 genannten Merkmalen gelöst.

Der erfindungsgemäße Kugelhahn umfasst eine schaltbare Stelleinheit zum Einstellen bzw. Regeln der Durchflussmenge des strömenden Mediums. Dies ermöglicht in vorteilhafter Weise schnelle Schließzeiten und einstellbare Durchflussmengen des strömenden Mediums. Der erfindungsgemäße Kugelhahn ermöglicht sowohl eine Absperrfunktion als auch eine Einstellfunktion, d.h. der Kugelhahn vereint beide Funktionen. Die Vorteile eines herkömmlichen Kugelhahnes, nämlich u. a. ein dichtes Absperren von Medien, insbesondere bei hohen Drücken, werden mit den Vorteilen von Regelarmaturen in Form von Klappen oder Ventilen, die eine vorteilhafte Durchflussregelung bzw. eine Durchflussbegrenzung von Medienströmen ermöglichen, kombiniert. Dies ermöglicht in vorteilhafter Weise sehr schnelle Reaktionszeiten des Kugelhahns. Aufgrund der Trennung der beiden Funktionen, kann die Stelleinheit zum Einstellen der Durchflussmenge des strömenden Mediums einfacher, leichter sowie schwächer und somit kostengünstiger ausgelegt werden.

In Ausgestaltung des erfindungsgemäßen Kugelhahns ist die Stelleinheit innerhalb der Absperrvorrichtung angeordnet. Dies ermöglicht eine optimale Anpassung der Erfindung an bestehende Konstruktionen, insbesondere die Verwendung von vorhandenem Bauraum. Ferner kann die Stelleinheit in vorteilhafter Weise in jeder einem Fachmann als sinnvoll erscheinenden Art in der Absperrvorrichtung gelagert sein. Im geöffneten Zustand des Kugelhahns ist über die Stelleinheit jederzeit eine stufenlose Einstellung der Durchflussmenge des Mediums möglich.

In weiterer Ausgestaltung des erfindungsgemäßen Kugelhahns sind die Absperrvorrichtung und/oder die Stelleinheit über mindestens eine Welle um eine Drehachse verschwenkbar gelagert. Hieraus ergibt sich in vorteilhafter Weise eine einfache und stufenlose Einstellung der Absperrvorrichtung und/oder der Stelleinheit.

Die Lagerung der Absperrvorrichtung und der Stelleinheit über die mindestens eine Welle ist vorzugsweise derart ausgeführt, dass die Lagerung über zwei Wellen erfolgt, indem die Absperrvorrichtung drehfest mit einer ersten Stellwelle verbunden ist, und die Stelleinheit drehfest mit einer zweiten Stellwelle verbunden ist. Die zweite Stellwelle ist bei dieser Ausführungsform der Erfindung in einer Durchgangsöffnung und in einer Aufnahmeöffnung geführt, welche in die Absperrvorrichtung eingebracht sind, wobei die massive Ausführung der beiden Stellwellen insbesondere für Hochdruckanwendungen geeignet ist.

Vorzugsweise sind jeweils separate Antriebe für die Absperrfunktion, d. h. die Absperrvorrichtung und die Regelfunktion, d. h. die Stelleinheit, vorgesehen. Dabei kann bei der Absperrvorrichtung ein (Auf/Zu)-Antrieb zum Schalten hoher Momente bei hohen Differenzdrücken vorgesehen sein. Dies ist vorteilhaft, um die hohen Losbrechmomente beim Öffnen bzw. Schließen überwinden zu können. Eine aufwändige und teure Steuereinrichtung ist für den (Auf/Zu)-Antrieb nicht notwendig, da durch diesen nur ein einfaches Öffnen und Schließen, jedoch keine Regelung erfolgen muss. Dadurch werden günstige Herstellkosten realisiert. Der (Regel)-Antrieb für die Stelleinrichtung zum Einstellen der Durchflussmenge bzw. zur Durchflussregelung kann deutlich kleiner dimensioniert werden als der (Auf/Zu)-Antrieb der Absperrvorrichtung, da der (Regel)-Antrieb keine hohen Betätigungsmomente bzw. Losbrechmomente überwinden muss.

Der (Regel)-Antrieb für die Stelleinrichtung kann über eine entsprechend geeignete Steuer- bzw. Regeleinrichtung verfügen, so dass die gewünschte Durchflussmenge eingestellt werden kann. Nachdem der (Regel)-Antrieb für die Stelleinrichtung klein dimensioniert werden kann, sind die für die Steuereinrichtung notwendigen Komponenten erheblich günstiger als dies beim Stand der Technik der Fall war, bei welchem der Regelantrieb die hohen Betätigungsmomente (Losbrechmomente) überwinden und daher entsprechend groß dimensioniert werden musste.

Der Regelantrieb bzw. dessen Steuereinrichtung ist vorzugsweise derart ausgelegt, dass bekannte Regelcharakteristiken/Regeleigenschaften einer Regelklappe erzielt werden können.

Ein besonderer Vorteil der erfindungsgemäßen Vorrichtung besteht darin, dass durch den Öffnungsvorgang der Armatur, d. h. durch die Betätigung der Absperrvorrichtung die einzustellende Durchflussmenge nicht beeinflusst wird. Aufgrund der hohen Betätigungsmomente bzw. Losbrechmomente beim Öffnen haben die bekannten Regelklappen übersteuert und es waren mehrere Korrekturschritte notwendig, bis die gewünschte Durchflussmenge eingestellt war. Die erfindungsgemäße Lösung reduziert die notwendigen Korrekturen zum Erreichen der Durchflussmenge erheblich, da bereits beim Öffnen der Absperrvorrichtung die Stelleinrichtung, d. h. die Regelklappe in dem Kugelküken auf die gewünschte Durchflussmenge eingestellt werden kann. Die Absperrvorrichtung, d. h. das Kugelküken, muss daher lediglich vollständig geöffnet werden, die gewünschte Durchflussmenge kann bereits während dem Öffnungsvorgang durch eine entsprechend geeignete Stellung der Regelklappe eingestellt werden. Der vorgesehene Sollwert wird somit schneller erreicht. Durch eine steuerungstechnische Kopplung des (Auf/Zu)-Antriebs der Absperrvorrichtung und des (Regel)-Antriebs der Stelleinrichtung können besondere Funktionen der Armatur, z. B. Verhinderung von Druckstößen, Füllvorgänge (z. B. langsame Befüllung) oder extreme Schließ- bzw. Öffnungszeiten realisiert werden. Dabei kann vorgesehen sein, dass beim Öffnen des Kugelhahns zur Vermeidung bzw. Reduzierung von Druckstößen die Regelklappe auf "zu" steht, damit die Druckstöße reduziert werden. Beim Schließen des Kugelhahns kann die Regelklappe auf "offen" stehen.

Die Verhinderung von Druckstößen bzw. das schnelle Erreichen des vorgesehenen Sollwertes ist insbesondere auch beim Befüllen von Gasflaschen vorteilhaft. Um möglichst kurze Taktzeiten zu erreichen, ist es hier notwendig, dass der zum Befüllen der Gasflasche vorgesehene Sollwert schnell erreicht wird, ohne dass mehrmals nachgeregelt werden muss. In Versuchen hat sich herausgestellt, dass dies durch die erfindungsgemäße Lösung möglich ist und sich dadurch eine erhebliche Reduzierung der Taktzeiten ergibt.

Eine besonders bauraumsparende Ausführung der Lagerung, die für niedrigere Druckverhältnisse geeignet ist ergibt sich, wenn die erste Stellwelle als hohle Außenwelle ausgeführt ist, und die zweite Stellwelle als in der Außenwelle angeordnete Innenwelle ausgeführt ist. Das bedeutet, dass die Absperrvorrichtung über die als hohle Außenwelle ausgeführte erste Stellwelle verschwenkbar gelagert ist, und die Stelleinheit über die in der Außenwelle angeordnete als Innenwelle ausgeführte zweite Stellwelle verschwenkbar gelagert ist.

Für beide Ausführungsformen mit zwei separaten Stellwellen ergeben sich zwei voneinander unabhängige Möglichkeiten der Schaltung der Absperrvorrichtung und der Stelleinheit.

Die Wirkverbindung der Absperrvorrichtung mit der ersten Stellwelle kann dadurch umgesetzt werden, dass die Absperrvorrichtung über ein drehfest mit der Absperrvorrichtung verbundenes Betätigungselement in Wirkverbindung mit der ersten Stellwelle steht. Alternativ kann die Absperrvorrichtung formschlüssig mit der ersten Stellwelle verbunden werden.

Die Wirkverbindung der Stelleinheit mit der zweiten Stellwelle kann dadurch umgesetzt werden, dass die Stelleinheit fest mit der zweiten Stellwelle verbunden ist. Vorzugsweise ist die Stelleinheit formschlüssig mit der zweiten Stellwelle verbunden. Ein zusätzliches Befestigungsmittel kann somit in vorteilhafter Weise entfallen. Alternativ kann die Stelleinheit über ein Betätigungselement mit der zweiten Stellwelle drehfest verbunden werden.

Die Absperrvorrichtung kann in vorteilhafter Weise als ein kugel-, kegel- oder zylinderförmiges Öffnungs- und Schließelement ausgeführt werden. Hierdurch unterliegt die Erfindung keiner Einschränkung hinsichtlich ihrer Einsatzmöglichkeit, sondern es ist ein breiter Einsatz der Erfindung in üblichen Kugelhähnen möglich.

In weiterer Ausgestaltung kann die Stelleinheit als ein scheibenförmiges Einstellelement ausgeführt werden. Dies ermöglicht in vorteilhafter Weise eine schnelle und leichte Einstellung der Durchflussmenge. Zudem besteht aufgrund der scheibenförmigen Ausgestaltung die Möglichkeit das Bauteil in Bezug auf seine Einstellfunktion individuell auszugestalten, indem das Bauteil beispielsweise in seiner Grundfläche oder seiner Dicke variiert. Hierdurch kann insbesondere Einfluss auf die Masse und/oder das Material der Einstellscheibe genommen werden. Mit einer geringeren Masse kann die Einstellscheibe auch schneller bewegt werden, wodurch auch ihre Lagerung und ihr Antrieb schwächer ausgelegt werden können. Eine Übersteuerung der Einstellscheibe kann damit ebenfalls vermieden werden. Insbesondere ermöglicht die scheibenförmige Ausgestaltung des Einstellelements auch den Einsatz eines Standardteils bzw. eines Normteiles.

Dadurch, dass die Stelleinheit keine Dichtfunktion übernehmen muss, kann diese entsprechend schwach ausgelegt bzw. gering dimensioniert werden, so dass die Druckverluste bzw. der Durchflusswiderstand, den die Stelleinheit verursacht, gering ist.

Im geschlossenen Zustand deckt das scheibenförmige Einstellelement in vorteilhafter Weise eine Fläche ab, die kleiner als eine Querschnittsfläche des Durchflusskanals bzw. des Innendurchmessers des Kugelkükens ist. Somit wird die Einstellscheibe auch im geschlossenen Zustand noch von Medium umströmt. Dadurch besteht die Möglichkeit die Einstellscheibe mit einer geringeren Dicke auszuführen, da die Drücke im Durchflusskanal im geschlossenen Zustand der Einstellscheibe schwächer ausfallen und somit auch die Einstellscheibe schwächer und damit auch im Hinblick auf die Auswahl des Materiales kostengünstiger ausgelegt werden kann. Insbesondere kann die Einstellscheibe aufgrund ihrer geringeren Masse auch schneller bewegt werden, wodurch auch ihre Lagerung und ihr Antrieb schwächer ausgelegt werden können. Ferner entfällt hierbei in vorteilhafter Weise auch der Einsatz einer Dichtung zwischen einer Wand des Durchflusskanals und der Einstellscheibe.

In dieser Ausführungsform ermöglicht das Einstellelement im geschlossenen Zustand in vorteilhafter Weise z. B. eine Durchflussmenge des Mediums zwischen 5 und 20 Prozent einer maximalen Durchflussmenge. Diese Ausgestaltung begrenzt den Druckaufbau an der Einstellscheibe auf einen optimalen Wert, indem auch die Strömungsgeschwindigkeit des Mediums optimal eingestellt bzw. begrenzt ist.

Alternativ kann jedoch auch vorgesehen sein, dass die Einstellscheibe im geschlossenen Zustand den Durchflusskanal annähernd vollständig verschließt.

In weiterer Ausgestaltung umfasst der erfindungsgemäße Kugelhahn zwei getrennte Antriebe zum Schalten der Absperrvorrichtung zum Öffnen und Schließen des Durchflusskanals und der Stelleinheit zum Einstellen der Durchflussmenge des strömenden Mediums, welche in vorteilhafter Weise steuerungstechnisch miteinander gekoppelt sind. Hierdurch ist eine optimale, aufeinander abgestimmte Schaltung der Absperrvorrichtung und der Stelleinheit möglich.

Dadurch, dass in den Kugelhahn eine Regelscheibe integriert ist, erhält der Kugelhahn eine Regelfunktionalität, die bisher mit Kugelhähnen nicht erreicht werden konnte.

Durch die erfindungsgemäße Lösung ist es möglich, Kugelhahneigenschaften und -vorteile, wie z. B. Double Block & Bleed, Double/Single-Piston, zu nutzen. Die Double Block & Bleed-Funktionalität ergibt sich dadurch, dass der Kugelhahn vorteilhaft zur Aufnahme eines Sperrmediums genutzt werden kann. Die Double/Single-Piston-Funktionalität ergibt sich dadurch, dass der Setzring so gestaltet werden kann, dass dieser bei einem Druckanstieg im Totraum öffnet. Diese Funktionalitäten sind dem Fachmann grundsätzlich geläufig.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

### Es zeigen:

- Fig. 1: Teile eines erfindungsgemäßen Kugelhahns in perspektivischer Darstellung;
- Fig. 2: einen Längsschnitt durch einen erfindungsgemäßen Kugelhahn in Offenstellung; und
- Fig. 3: einen Längsschnitt durch einen erfindungsgemäßen Kugelhahn in Schließstellung.

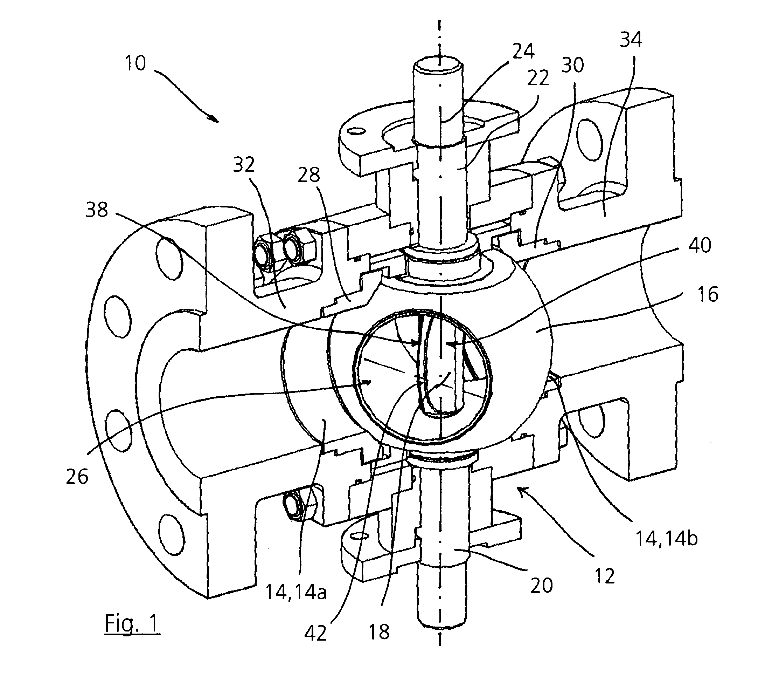

Die Figuren 1 bis 3 zeigen einen Kugelhahn 10 mit einem Gehäuse 12, welcher vorzugsweise zum Einstellen von Gasströmen aber auch für andere Fluidströme einsetzbar ist. Das Gehäuse 12 weist einen Durchflusskanal 14 für ein strömendes Medium mit einem ersten, zuflussseitigen Abschnitt 14a, einem zweiten abflussseitigen Abschnitt 14b und einem zwischen dem ersten Abschnitt 14a und dem zweiten Abschnitt 14b angeordneten, dritten Abschnitt 14c auf. An den äußeren Enden der ersten beiden Abschnitte 14a und 14b befinden sich jeweils Anschlussstutzen 28, 30 zum Anschluss von Rohrleitungen 32, 34. Im Gehäuse 12 ist eine schaltbare Absperrvorrichtung 16 zum Öffnen und Schließen des Durchflusskanals 14 gelagert.

Um schnelle Schließzeiten des Kugelhahnes 10 zu ermöglichen, ist erfindungsgemäß eine schaltbare Stelleinheit 18 zum Einstellen der Durchflussmenge des strömenden Mediums vorgesehen. Im vorliegenden Ausführungsbeispiel ist die Stelleinheit 18 als scheibenförmiges Einstellelement ausgebildet. Vorzugsweise verringert sich die Dicke der Einstellscheibe 18 zu einer Mantelfläche 42 hin, wobei die Einstellscheibe jegliche einem Fachmann als sinnvoll erscheinende geometrische Abmessungen aufweisen kann.

Die Absperrvorrichtung 16 zum Öffnen und Schließen des Durchflusskanals 14 ist im vorliegenden Ausführungsbeispiel als kugelförmiges Öffnungs- und Schließelement ausgebildet, welches als sogenanntes "Kugelküken" bekannt ist. Alternativ hierzu sind auch kegel-, zylinderförmige oder weitere einem Fachmann als sinnvoll erscheinende Öffnungs- und Schließelemente denkbar. Die Stelleinheit 18 zum Einstellen der Durchflussmenge des strömenden Mediums ist innerhalb der Absperrvorrichtung 16 gelagert, wobei die Lagerung in jeder einem Fachmann als sinnvoll erscheinender Weise erfolgen kann.

Im vorliegenden Ausführungsbeispiel sind die Absperrvorrichtung 16 und die Stelleinheit 18 über zwei, voneinander unabhängige Stellwellen 20, 22 um eine Drehachse 24 verschwenkbar gelagert. Die beiden Stellwellen liegen auf einer Achse (Drehachse 24) und werden auf gegenüberliegenden Seiten an das Kugelküken bzw. Absperrvorrichtung 16 herangeführt. Die. Absperrvorrichtung 16 ist über eine erste Stellwelle 20 und die Stelleinheit 18 ist über eine zweite Stellwelle 22 verschwenkbar gelagert. Die Absperrvorrichtung 16 steht über ein drehfest mit der Absperrvorrichtung 16 verbundenes, hier nicht sichtbares Betätigungselement in Wirkverbindung mit der ersten Stellwelle 20. Das Betätigungselement ist beispielsweise als Zapfen ausgebildet, welcher vorzugsweise formschlüssig mit der Absperrvorrichtung 16 verbunden ist. Die Stelleinheit 18 ist fest, vorzugsweise formschlüssig mit der zweiten Stellwelle 22 verbunden, wobei die zweite Stellwelle 22 in Fig. 1 oberhalb der Stelleinheit 18 in einer in die Absperrvorrichtung 16 eingebrachten Durchgangsöffnung drehbar geführt ist und unterhalb der Stelleinheit 18 in einer nicht sichtbaren Aufnahmeöffnung drehbar geführt ist, die beispielsweise als Sackbohrung ausgeführt ist.

Bei einer nicht dargestellten alternativen Ausführungsform der Erfindung kann die erste Stellwelle 20 als hohle Außenwelle und die zweite Stellwelle 22 als in der hohlen Außenwelle angeordnete Innenwelle ausgeführt werden. Auch bei dieser alternativen Ausführungsform steht die Absperrvorrichtung 16 über ein drehfest mit der Absperrvorrichtung 16 verbundenes, hier nicht sichtbares Betätigungselement in Wirkverbindung mit der als Außenwelle ausgeführten ersten Stellwelle 20. Die Stelleinheit 18 ist fest, vorzugsweise formschlüssig mit der als Innenwelle ausgeführten zweiten Stellwelle 22 verbunden.

Über die Stellwellen 20, 22 ist jeweils ein Drehmoment einleitbar, um die Absperrvorrichtung 16 bzw. die Stelleinheit 18 zu schalten bzw. zu verdrehen. Das Schalten der Absperrvorrichtung 16 zum Öffnen und Schließen des Durchflusskanals 14 und/oder der Stelleinheit 18 zum Einstellen der Durchflussmenge des strömenden Mediums kann über mindestens einen mechanischen, elektrischen, pneumatischen, elektromagnetischen und/oder hydraulischen Antrieb erfolgen. Im vorliegenden Ausführungsbeispiel weisen die Absperrvorrichtung 16 und die Stelleinheit 18 getrennte Antriebe auf, welche steuerungstechnisch miteinander gekoppelt sind.

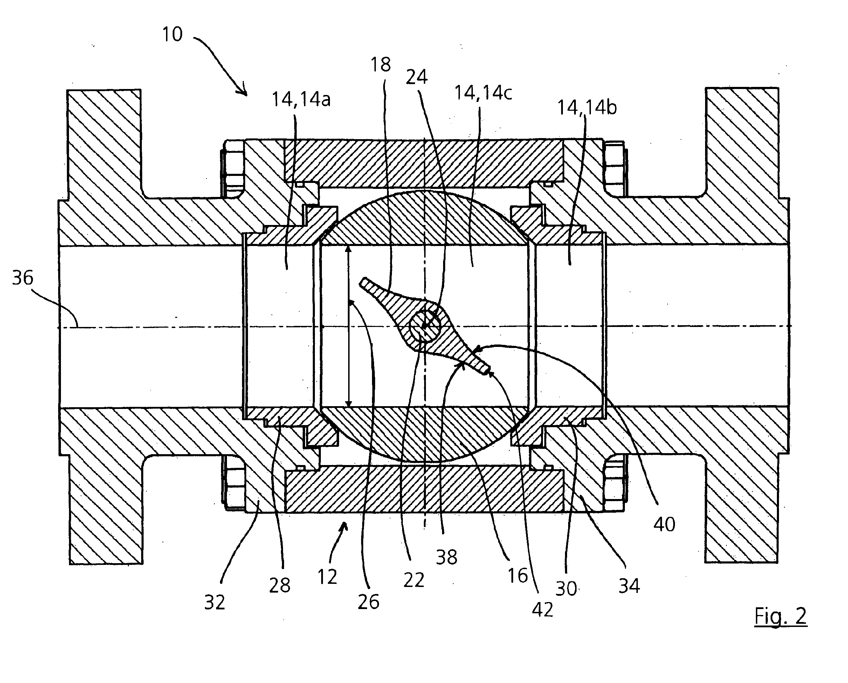

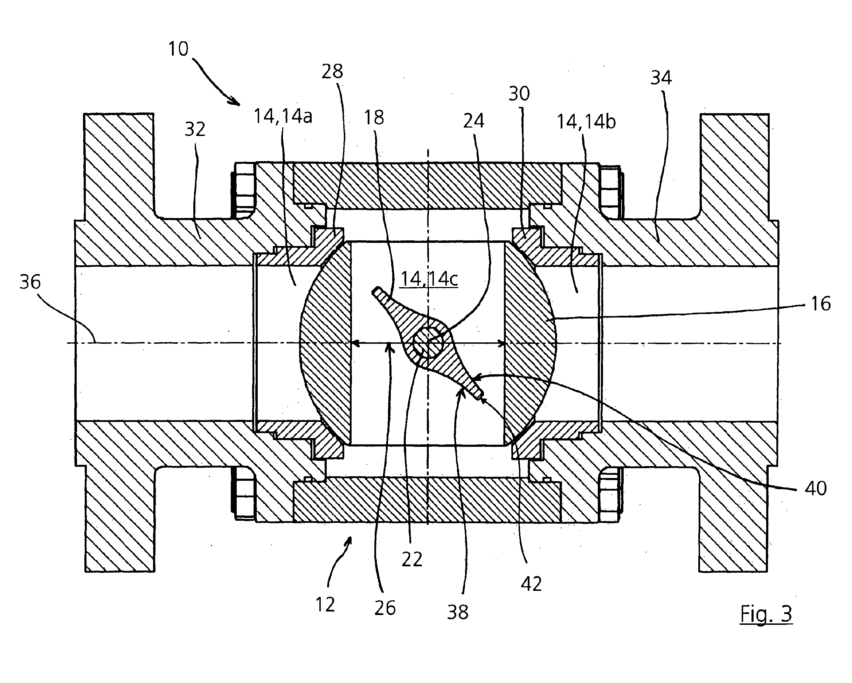

Die Absperrvorrichtung 16 weist den als vorrichtungsseitigen Durchflusskanal ausgebildeten Abschnitt 14c des Durchflusskanals 14 für das strömende Medium auf, der in der Offen-Stellung der Absperrvorrichtung gemäß Fig. 2 mit den Abschnitten 14a, 14b des gehäuseseitigen Durchflusskanals 14 in Strömungsverbindung steht und somit in dieser Stellung als Überbrückung des zuflussseitigen Abschnitts 14a und des abflussseitigen Abschnitts 14b des Durchflusskanals 14 dient. In der Offen-Stellung der Absperrvorrichtung 16 bilden somit die gehäuseseitigen Abschnitte 14a und 14b und der vorrichtungsseitige Abschnitt 14c einen für das strömende Medium durchgängigen Durchflusskanal 14. Der vorrichtungsseitige Abschnitt 14c des Durchflusskanals 14 weist vorzugsweise denselben Querschnitt 26 als die gehäuseseitigen Abschnitte 14a und 14b des Durchflusskanals 14 auf. Die Vorrichtung 16 wird mit einer 90-Grad-Drehbewegung aus der Offen-Stellung in die Geschlossen-Stellung gebracht. In der GeschlossenStellung gemäß Fig. 3 ist der Durchfluss des Mediums vollständig unterbrochen bzw. der Durchflusskanal 14 vollständig abgesperrt, indem die Abschnitte 14a und 14b strömungstechnisch nicht miteinander in Verbindung stehen, sondern über die Absperrvorrichtung 16 verschlossen sind.

Im geöffneten Zustand des Durchflusskanals 14 bzw. in der Offen-Stellung der Absperrvorrichtung 16 ist nun über die Stelleinheit 18 die Durchflussmenge des strömenden Mediums einstellbar. Vorzugsweise ist die Stelleinheit 18 stufenlos schaltbar bzw. um die Drehachse 24 schwenkbar, d.h. die Stelleinheit kann ausgehend von einem vollkommen geöffneten Zustand stufenlos in jede Position bis hin zum geschlossenen Zustand verdreht werden, wobei in den Figuren 2 und 3 jeweils eine Zwischenposition des scheibenförmigen Einstellelements 18 dargestellt ist. Im vollkommen geöffneten Zustand liegt die Einstellscheibe 18 in Richtung einer Längsachse 36 im Durchflusskanal 14, d.h. ihre Grundflächen 38, 40 verlaufen im Wesentlichen in Richtung der Längsachse 36, und die Einstellscheibe 18 bildet nur einen verhältnismäßig kleinen Widerstand für das strömende Medium, welches in einer gewünschten maximalen Durchflussmenge von 100 % durchfließen kann. Im geschlossenen Zustand deckt das scheibenförmige Einstellelement 18 eine Fläche ab, welche kleiner als die Querschnittsfläche 26 des Durchflusskanals 14, d.h. die Grundflächen 38, 40 des scheibenförmigen Einstellelements 18 sind jeweils kleiner als die im Bereich der Lagerung des Einstellelements 18 befindliche Querschnittsfläche 26 des Durchflusskanals 14. Dies bedeutet, dass die Einstellscheibe 18 den Durchflusskanal 14 nicht vollständig abdichtet, sondern es bleibt ein Spalt zwischen Gehäuse 12 und Einstellscheibe 18, der eine Durchflussmenge des Mediums zwischen 5 und 20 Prozent der maximalen Durchflussmenge ermöglicht.

Die Erfindung eignet sich vorzugsweise zum Absperren bzw. zur Durchflussregelung von Leitungen, in denen sehr hohe Drücke, beispielsweise von 40 bis 200 bar, vorzugsweise 100 bis 150 bar herrschen.

## Patentansprüche

1. Kugelhahn mit einem Gehäuse, einem im Gehäuse verlaufenden Durchflusskanal für ein strömendes Medium, einer im Gehäuse gelagerten, schaltbaren Absperrvorrichtung zum Öffnen und Schließen des Durchflusskanals,
**gekennzeichnet durch**
eine schaltbare Stelleinheit (18) zum Einstellen der Durchflussmenge des strömenden Mediums.

2. Kugelhahn nach Anspruch 1,
**dadurch gekennzeichnet, dass**
die Stelleinheit (18) innerhalb der Absperrvorrichtung (16) angeordnet ist.

3. Kugelhahn nach Anspruch 1 oder 2,
**dadurch gekennzeichnet, dass**
die Absperrvorrichtung (16) und/oder die Stelleinheit (18) über mindestens eine Welle (20, 22) um eine Drehachse (24) verschwenkbar gelagert sind.

4. Kugelhahn nach Anspruch 3,
**dadurch gekennzeichnet, dass**
die Absperrvorrichtung (16) drehfest mit einer ersten Stellwelle (20) verbunden ist.

5. Kugelhahn nach Anspruch 3 oder 4
**dadurch gekennzeichnet, dass**
die Stelleinheit (18) drehfest mit einer zweiten Stellwelle (22) verbunden ist.

6. Kugelhahn nach Anspruch 4 oder 5,
**dadurch gekennzeichnet, dass**
die drehfeste Verbindung über einen Formschluss oder ein Betätigungselement erfolgt.

7. Kugelhahn nach einem der Ansprüche 4 bis 6,
**dadurch gekennzeichnet, dass**
die erste Stellwelle (20) und die zweite Stellwelle (22) auf einer gemeinsamen Drehachse (24) verlaufen.

8. Kugelhahn nach einem der vorhergehenden Ansprüche,
**dadurch gekennzeichnet, dass**
die Absperrvorrichtung (16) als kugel-, kegel- oder zylinderförmiges Öffnungs- und Schließelement ausgeführt ist.

9. Kugelhahn nach einem der vorhergehenden Ansprüche,
**dadurch gekennzeichnet, dass**
die Stelleinheit (18) als scheibenförmiges Einstellelement ausgeführt ist.

10. Kugelhahn nach Anspruch 9,
**dadurch gekennzeichnet, dass**
das scheibenförmige Einstellelement (18) im geschlossenen Zustand eine Fläche abdeckt, welche kleiner als eine Querschnittsfläche (26) des Durchflusskanals (14) ist.

11. Kugelhahn nach Anspruch 10,
**dadurch gekennzeichnet, dass**
eine im geschlossenen Zustand des Einstellelements (18) nicht abgedeckte Restfläche der Querschnittsfläche (26) des Durchflusskanals (14) eine Durchflussmenge des Mediums zwischen 5 und 20 Prozent der maximalen Durchflussmenge ermöglicht.

12. Kugelhahn nach einem der vorhergehenden Ansprüche,
**gekennzeichnet durch**
mindestens einen Antrieb zum Schalten der Absperrvorrichtung (16) zum Öffnen und Schließen des Durchflusskanals (14) und/oder der Stelleinheit (18) zum Einstellen der Durchflussmenge des strömenden Mediums.

13. Kugelhahn nach Anspruch 12,
**dadurch gekennzeichnet, dass**
die Absperrvorrichtung (16) und die Stelleinheit (18) separate Antriebe aufweisen, welche steuerungstechnisch miteinander gekoppelt sind.
